# EUROPEAN PATENT APPLICATION

(11) **EP 2 159 682 A2**
(43) Date of publication of application: **03.03.2010**
(21) Application number: 09165251.1
(22) Date of filing: 10.07.2009
(51) Int. Cl.: G06F 3/12

(54) **Workform management apparatus and method, image forming apparatus, and workform management system**

(30) Priority: 29.08.2008 KR 20080085123
(71) Applicant: Samsung Electronics Co., Ltd., Suwon-si, Gyeonggi-do (KR)
(72) Inventor: Choi, Young-woo, Seoul (KR)
(74) Representative: Walaski, Jan Filip

(57) **Abstract**

A workform management apparatus and method, an image forming apparatus, and a workform management system are provided. In the workform management apparatus, a workform storage unit stores one or more workforms, an update execution unit updates the stored workforms in accordance with a preset workform update option, and a main control unit controls the workform storage unit to store the updated workforms.

## Description

Aspects of the present invention relate to a workform management apparatus and method, an image forming apparatus, and a workform management system, and more particularly, to a workform management apparatus and method, an image forming apparatus, and a workform management system, which can preliminarily perform a workform.

With the development of networks, a plurality of user terminals can share a plurality of image forming apparatuses, and a user can perform work using the plurality of image forming apparatuses. For this purpose, a user accesses a server, and writes a plurality of workforms for managing works provided from the plurality of image forming apparatuses. The user selects a desired workform among the plurality of workforms, and requests an execution thereof. The respective workforms include information on image forming apparatuses that perform the workforms, e.g. "Input", "Destination", and the like. "Input" refers to an image forming apparatus that provides data to be processed, and "Destination" refers to an image forming apparatus that completes the data process.

However, according to the above-described method, the state information of respective devices when the workforms were written may differ from the present state information of the devices. For example, the devices that were set to "Departure" and "Destination" while writing the workforms, were in an available state, but the present apparatus corresponding to "Destination" may presently be in an invalid state or in an unavailable state. In this case, the user, the server, or the image forming apparatus cannot recognize that the device is in an invalid state, and requests the execution of the selected workform.

Accordingly, the selected workform fails to operate, and the user should change the workform after the failure. According to the conventional art, although the state of the image forming apparatus for performing the workform has been changed, a server that stores the workform merely transmits the stored workform, but cannot reflect the changed state. Accordingly, the user cannot judge in advance whether the workfoim can be executed or whether to edit the workform.

Aspects of the present invention provide a workform management apparatus and method, an image forming apparatus, and a workform management system, which can prevent the occurrence of an error by preliminarily performing a workform, and can increase user convenience by providing changed workform information to a user.

According to an aspect of the present invention, a workform management method is provided. The method includes writing and storing a workform; updating the stored workform in accordance with a preset workform update option; and storing the updated workform.

According to an aspect of the present invention, the update operation may include preliminarily performing the stored workform before actually performing the stored workform.

According to an aspect of the present invention, the update operation may include changing the stored workform so that the stored workform can be performed if the performing of the stored workform would be impossible.

According to an aspect of the present invention, the workform update option may include at least one of an automatic update and a manual update.

According to an aspect of the present invention, the workform management method a user requesting a manual update of a received workform in an image forming apparatus receiving the received workform; and updating the received workform by preliminarily performing the received workform.

According to an aspect of the present invention, the workform management method may further include transmitting the updated workform to the image forming apparatus to perform the updated workform.

According to an aspect of the present invention, the performing of the updated workform may include displaying information corresponding to the update of the updated workform before performing the updated workfom.

According to another aspect of the present invention, a workform management apparatus is provided. The workform management apparatus includes a workform storage unit to store one or more workforms; an update execution unit to update the stored workform in accordance with a preset workform update option; and a main control unit to control the workform storage unit to store the updated workform.

According to an aspect of the present invention, the update execution unit may preliminarily perform the stored workform before actually performing the stored workform.

According to an aspect of the present invention, the update execution unit may change the stored workform so that the workform can be performed if the performing of the stored workform would be impossible.

According to an aspect of the present invention, the workform management apparatus may further include a communication unit to communicate with one or more image forming apparatuses, wherein the one or more image forming apparatuses receive the stored workform through the communication unit, and if a user requests a manual update of the received workform in the image forming apparatus, the main control unit controls the update execution unit to preliminarily perform the received workform.

According to an aspect of the present invention, the main control unit may transmit the updated workform to the one or more image forming apparatuses, so that the one or more image forming apparatuses perform the updated workform.

According to an aspect of the present invention, the one or more image forming apparatuses may display information corresponding to the update of the workform before performing the updated workform.

According to still another aspect of embodiments of the present invention, an image forming apparatus is provided. The image forming apparatus includes a communication interface unit to receive a workform; a display panel to display the received workform; a user input unit to set an update option with respect to the received workform; and a control unit to request a workform management apparatus to preliminarily perform the received workform in accordance with the set update option.

According to an aspect of the present invention, the communication interface unit may receive a result of preliminary performing of the received workform from the workform management apparatus, and the control unit may confirm updated workform information from the result of the preliminary performing of the received workform and display the confirmed information.

According to still another aspect of embodiments of the present invention, a workform management system is provided. The workform management system includes one or more image forming apparatuses connected through a network to perform a workform related to image forming; a workform management apparatus to update the workform by preliminarily performing the workform in accordance with a preset workform update option; and a user terminal to set the workform update option by accessing the workform management apparatus.

According to still another aspect of embodiments of the present invention, a workform management system is provided. The workform management system includes an image forming apparatuses to perform a workform related to image forming, to write a workform in accordance with a workform application, and to update the written workform by preliminarily performing the workform in accordance with a set workform update option; and a workform management apparatus to store the workform written in the image forming apparatus and the updated workform.

According to an aspect of the present invention, the image forming apparatus may include a display panel to display a menu for setting the workform update option; and a user input unit to select a desired workform update option from the displayed menu.

Additional aspects and/or advantages of the invention will be set forth in part in the description which follows and, in part, will be obvious from the description, or may be learned by practice of the invention.

These and/or other aspects and advantages of the invention will become apparent and more readily appreciated from the following description of the embodiments, taken in conjunction with the accompanying drawings of which:
FIG. 1 illustrates a workform management system according to an embodiment of the present invention;
FIG. 2 is a block diagram of the workform management apparatus of FIG. 1;
FIG. 3 illustrates an example of an update option setting screen;
FIG. 4 is a block diagram of the detailed construction of an update execution unit;
FIG. 5 illustrates an example of a screen displaying workform change information in accordance with a preliminary performing of the workform;
FIG. 6 is a block diagram of the construction of the image forming apparatus of FIG. 1;
FIG. 7 is a flowchart of a workform management process performed by the apparatus of FIG. 2;
FIG. 8 is a flowchart of a workform management process performed by the apparatus of FIG. 6; and
FIG. 9 is a block diagram illustrating the construction of a workform management system according to another embodiment of the present invention.

Reference will now be made in detail to the present embodiments of the present invention, examples of which are illustrated in the accompanying drawings, wherein like reference numerals refer to the like elements throughout. The embodiments are described below in order to explain the present invention by referring to the figures.

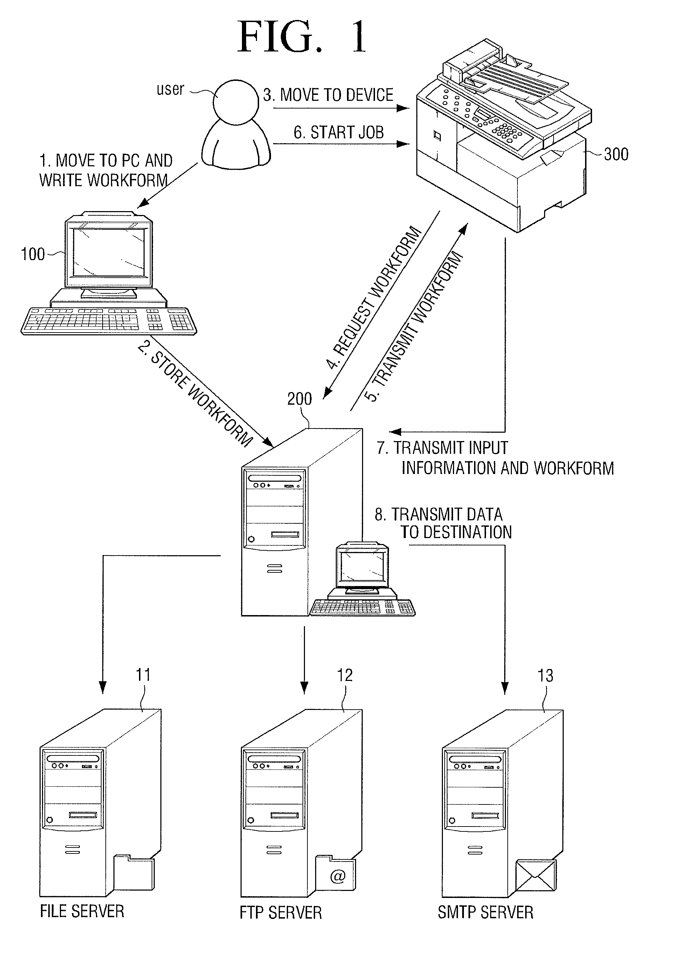

FIG. 1 illustrates a workform management system according to an embodiment of the present invention. The workfom management system according to an embodiment of the present invention includes a user terminal 100, a workform management apparatus 200, and an image forming apparatus 300, which are communicably connected with one another through a wired/wireless network. The user terminal 100 may be a personal computer, a personal digital assistant (PDA), a laptop, and the like. The image forming apparatus 300 is a device capable of performing an image forming, and may be a multifunction peripheral, a printer, a facsimile, a scanner, a copy machine, and the like. A plurality of user terminals 100 and a plurality of image forming apparatuses may be provided. For convenience in explanation, only one image forming apparatus is illustrated in FIG. 1. The workform management system may include additional devices or devices different than the ones shown in FIG. 1.

The workform management apparatus 200 stores login information (IDs and passwords) of registered users, a plurality of workforms set by users, and workform management solutions for writing the workforms. The workform management apparatus 200 may be a computer that is managed by a manager or that can be used by a general user.

The image forming apparatus 300 receives the workform selected by a user from the workform management apparatus 200, displays the received workform, and operates based on the selected work of the displayed workform. The image forming apparatus 300 serves as an input source "Input" which provides data or a destination "Destination" to which data is transferred.

The workfom includes all information required to perform work provided from the image forming apparatus 300. For example, the workform includes diverse kinds of information, such as work written by users, devices that are to perform the work, the processing order of the work, working conditions, positions in which resultant data of the work is to be stored, and the like. If the stored workform is used, the user can automatically perform the work by selecting one of the predefined workforms, without needing to set the working conditions one by one whenever the user performs the work using the image forming apparatus 300.

The workform includes an input source that provides data to be processed and a destination to which the data is transferred. For example, the data to be processed may be a document to be scanned, the input source may be the image forming apparatus 300 that can scan the document, and the destination may be a file server 11, a file transfer protocol (FTP) server 12, or a simple mail transfer protocol (SMTP) server 13, to which the scanned document is to be transferred.

The user can write the workform and make a job request through the user terminal 100, the workform management apparatus 200, or the image forming apparatus 300. If the user logs in to the workform management apparatus 200 through the user terminal 100, the workform management apparatus 200 enables the user to write the workform and to set an update option of the workform by using a graphic user interface (GUI) screen provided by the solution.

Accordingly, the user writes the workform through the user terminal 100 (operation 1), and the written workform is transferred to and stored in the workform management apparatus 200 (operation 2). The workform management apparatus 200 actually writes and stores the workform using a web language, such as an extensible markup language (XML), in accordance with the user's request. Other languages, in addition to or instead of web languages, may also be employed.

If the user moves to the image forming apparatus 300 (operation 3), and requests transmission of the workform (operation 4), the workform management apparatus 200 transmits one or more workforms stored therein to the image forming apparatus 300 (operation 5). If the user selects a desired workform and requests a job (operation 6), the image forming apparatus 300 reports the selected workform to the workform management apparatus 200 (operation 7). The workform management apparatus 200 processes the data in accordance with the selected workform and transmits the processed data to the destination (operation 8).

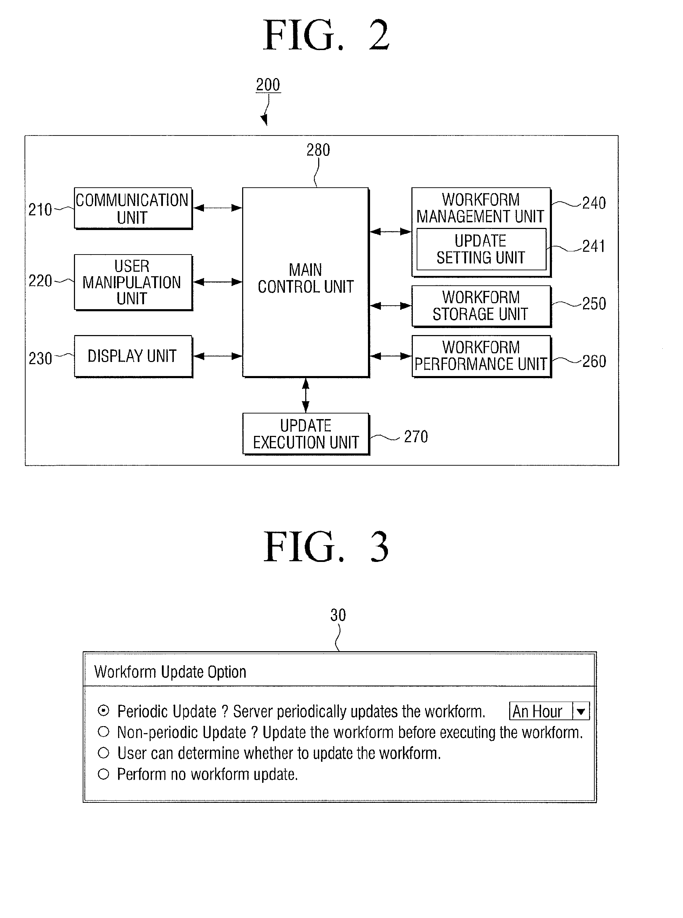

FIG. 2 is a block diagram of the workform management apparatus of FIG. 1. Referring to FIGS. 1 and 2, the workform management apparatus 200 includes a communication unit 210, a user manipulation unit 220, a display unit 230, a workform management unit 240, a workform storage unit 250, a workform performance unit 260, an update execution unit 270, and a main control unit 280. The workform management apparatus 200 may include additional and/or different units. Similarly, the functionality of two or more of the above units may be integrated into a single component. Furthermore, the units 240, 260, 270, and 280 may comprise one or more processors whose functionality is provided using software and/or firmware, and is not limited to the shown example.

The communication unit 210 is connected so as to communicate with the user terminal 100 and the image forming apparatus 300 through a communication network (not illustlated). The communication unit 210 receives user authentication information, a workform transmission request command, and the like, from the user terminal 100 or the image forming apparatus 300, and transmits the workform, workform change information, and the like, to the image forming apparatus 300. The communication can be through wired and/or wireless protocols.

The user manipulation unit 220, which is a user interface (such as a keyboard, touch screen display, or a mouse), selects functions supported by the workform management apparatus 200 and outputs a requested signal. If driving of a solution related to the workform writing is requested from the user manipulation unit 220 in the case where the user directly writes the workform through the workform management apparatus 200, the display unit 230 displays a workform screen provided from the workform management unit 240. In the case where the user writes the workform through the user terminal 100, the workform screen is provided to the user terminal 100.

The workform management unit 240 writes or edits the workform in accordance with the user's instruction by driving the workform management solution. The written workform is transmitted to the user terminal 100 to which the user logs in or to the image forming apparatus 300 to be displayed or stored therein. The user edits the contents of the workform or requests the work through the transmitted workform screen in the user terminal 100 or the image forming apparatus 300.

The workform management unit 240 includes an update determination unit 241. The update determination unit 241 sets the update option of the written workform as an automatic update or a manual update. The update determination unit 241 generates an update option setting screen 30 as shown in FIG. 3.

The update option setting screen 30 is displayed on the user terminal 100 if the user downloads a screen (e.g. a web page) for writing a workform from the workform management apparatus 200 by accessing the workform management apparatus 200, and writes the workform through the user terminal 100. The update option set through the user terminal 100 is transferred to and stored in the workform management apparatus 200.

Referring to FIG. 3, the update option is an option used to preliminarily perform the workform before the workforms is actually performed, and includes an automatic update and a manual update. The automatic update includes a periodic update to preliminarily perform the workform for a predetermined period, and a non-periodic update to preliminarily perform the workform when the operation of the workform is requested.

In the case of setting the periodic update, the user can set a period of preliminary performance by selecting a symbol "▼" as shown in FIG. 3. If "an hour" is set as the period of preliminary performance as shown in FIG. 3, the update execution unit 270 preliminarily performs the workform, of which the periodic update has been set, the case where the user sets the periodic update, every hour. The period may be set as an hour, 10 hours, one day, a week, one month, and the like.

The manual update is an option that can be set in the image forming apparatus 300. If the user requests the preliminary performance of the workform by manipulating the user manipulation unit 220, the image forming apparatus 300 displays an update setting screen that is identical or similar to that as illustrated in FIG. 3. If the user sets "manual update" after selecting the workform to be performed, the image forming apparatus 300 requests the manual update from the workform management apparatus 200, and the update execution unit 270 preliminarily performs the selected workfom.

The user can set the update option individually for each workform or set the same update option for all workforms mapping on the user by using the update option setting screen 30 as illustrated in FIG. 3. In FIG. 3, "No update" is an option where the automatic/manual update is not performed with respect to the corresponding workform. The set workform update option as illustrated in FIG. 3 is stored in the workform storage unit 250 together with the workform.

The workform storage unit 250 stores various kinds of programs used to operate the workform management apparatus 200, such as an operating system, workform management solutions, programs for driving the solutions, and various kinds of data generated during the operation of the workform management apparatus 200. The workform storage apparatus 200 stores user authentication information, workforms written by users, history information, data required to write the workforms, and the like. These should be interpreted as merely examples of the type of data that can be stored in the workform storage unit 350; the workform storage unit 350 may also store additional or different types of data. The storage unit 250 may be a hard drive or any other optical or magnetic storage medium. Moreover, the stored programs and/or data related to the operation can be stored external to the apparatus 200.

The history information shows the history of performing the workforms. The history information includes information on a date the workform was performed, a user ID for the workform, device names of an input source and a destination that perform the workform, and the like. The history information may also include information on whether data has been successfully provided from the input source of the workform, whether the data has been successfully performed at the destination, whether the input source and the destination have operated without error, and the like.

The workform performance unit 260 takes charge of transmission of the workform to the input source and the destination. For example, if various devices, such as the file server 11, the FTP server 12, the SMTP server 13, the image forming apparatus 300, and the like, are set as the destination to which the date is transferred, the workform performance unit 260 converts and processes the data using protocols supported by the respective devices. For example, if the destination is the SMTP server 13, the workform performance unit 260 converts the data into a transmittable format using the SMTP. The workform performance unit 260 may be separately provided in accordance with the types of the input source and the destination.

The update execution unit 270 changes the stored workform so that the workform performance becomes possible if the workform performance would otherwise be impossible. For example, the update execution unit 270 judges the state of the input source or the destination written in the workform by preliminarily performing the workform stored in the workform storage unit 250, and updates the workform based on the result of judgment. If the state of the input source or the destination written in the workform has been changed to an unavailable state, the workform is updated by changing the changed input source or destination. Examples of cases where the input source or the destination is in an unavailable state include a case where the communication through a network is impossible, a case where toner of the image forming apparatus is insufficient, a case where the mail storage capacity of the SMTP server 3 is in a loaded state, and the like.

Accordingly, even if the input source or the destination of the workform has been changed to be in an unavailable state, the user can use the workform of which the input source or destination has been replaced by an available input source or destination, and thus the failure of the workform performance can be prevented from occurring.

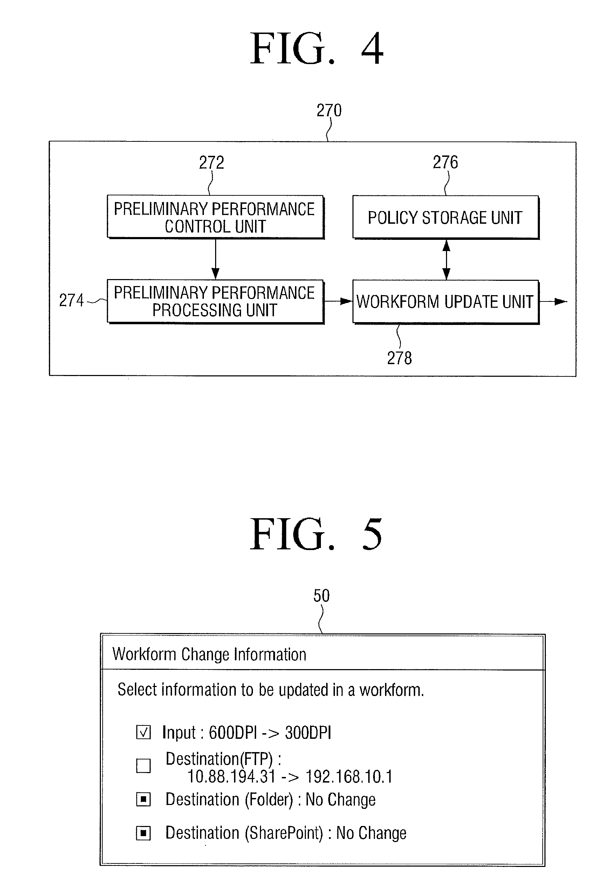

As illustrated in FIG. 4, the update execution unit 270 includes a preliminary performance control unit 272, a preliminary performance processing unit 274, a policy storage unit 276, and a workform update unit 278. The preliminary performance control unit 272 controls the workform performance unit 260 or requests the main control unit 280 to preliminarily perform the stored workform. Accordingly, the workform performance unit 260 preliminarily performs the workform.

For example, the preliminary performance control unit 272 confirms the input source set in the workform, and judges the state of the input source by performing a virtual simulation using the confirmed input source. If the destination of the workform is the SMTP server 13, the preliminary performance control unit 272 judges whether an e-mail transmission is possible by transmitting a test message to the SMTP server 13. If the destination of the workform is the FTP server 12, the preliminary performance control unit 272 uploads a small-sized file (e.g. a file composed of less than 1kbyte) to the FTP server 12. The preliminary performance control unit 272 provides the result of the preliminary performance to the preliminary performance processing unit 174.

The preliminary performance processing unit 274 judges the state of the input source and the destination of the respective workfom, i.e. the validity, invalidity, and availability thereof, by analyzing the result of the preliminary performance performed with respect to the respective workform. For example, if the storage of the test message in the SMTP server 3 fails in the process of the preliminary performance, the preliminary performance processing unit 274 judges that the STMP server 3 is unavailable.

The policy storage unit 276 stores an update policy for updating workforms for which the preliminary performance has failed, i.e. the unavailable workforms. The update policy includes a first policy for updating workforms that have failed in the preliminary performance by using one or more workforms which were successfully performed, and a second policy for updating the stored workform by using information according to workform operations preset by a manager. For example, the update policy can update the unavailable input source or destination for the workform. Additional policies, such as a third policy, fourth policy, and so on, may also be set to cover various situations.

An upper priority and a lower priority may be set for the first and second policies. The user can set an upper priority with respect to one of the first and second policies. The set priority is stored in the policy storage unit 276.

For the first policy, previously successful workforms are stored in the workform storage unit 250 as history information, and may be stored in the policy storage unit 276. In the case of the second policy, the manager or the user may preset input sources and destinations by functions (e.g. e-mail, FTP, print, and the like) as a backup. In the case of the second policy, if the destination is the SMTP server 13, one or more of a plurality of SMTP servers (not illustrated) are set as backup SMTP servers, and the destination of the workform having failed in the preliminary performance is changed to the set backup SMTP server. If the plurality of backup SMTP servers have been set, the manager may set the priorities of the backup SMTP servers.

The workform update unit 278 updates unavailable workforms in the preliminary performance. For example, the workform update unit 278 changes unavailable input sources or destinations using the preset update policy. The workform update unit 278 updates the workform by reflecting the changed input source or destination in the corresponding workform. The workform update unit 278 changes the unavailable input source or destination by firstly using one of the first and second policies having a higher priority.

Hereinafter, explanation will be made under the assumption that the preliminarily performed workform is "Scan to e-mail", the input source scanning a document is the image forming apparatus 300, and the destination to which the scanned document is transmitted by e-mail is the SMTP server 3.

If the first policy is set as the update policy, the workform update unit 278 classifies the successful workforms in the history information, extracts the workforms of which e-mail transmission is successful, and confirms the SMTP servers (not illustrated) set in the extracted workforms. Then, the workform update unit 278 sets the priorities of the confirmed SMTP servers (not illustrated) in the order of the most recently performed SMTP server to the most previously performed SMTP server.

If the first SMTP server of the most recently performed workform, i.e., the workform having the first priority, is different from the SMTP server 13 of the failed workform, the workform update server 278 changes the SMTP server 13 set in the workform to the first SMTP server. Accordingly, the destination of the workform is changed from the SMTP server 3 to the first SMTP server.

However, if the first SMTP server is identical to the SMTP server 13 of the failed workform, the workform update server 278 compares the second SMTP server of the workform having the second priority with the SMTP server 13 set in the failed workform. If the second SMTP server is different from the SMTP server 13, the workform update unit 278 changes the SMTP server 3 set in the failed workform to the second SMTP server.

If the first policy is set as the update policy, the workform update unit 278 extracts the workform for which the e-mail transmission is successful among the previously successful workforms, and changes the destination using the SMTP server most frequently used among the SMTP servers (not illustrated) set in the extracted workforms. This can be set when designing the workform management apparatus 200, or can be selected by the user.

If the second policy is set as the update policy, the workform update unit 278 changes the input source or destination of the workform of which preliminary performance has failed, i.e. unavailable input source or destination, to the destination preset by the manager. If the destination set by the manager is identical to the destination of the unavailable workform, the workform update unit 278 changes the destination of the unavailable workform using the destination having the next priority.

The update execution unit 270 preliminarily performs the workform in accordance with the update option set through the update setting unit 241. If the periodic update is set as the update option as shown in FIG. 3, the update execution unit 270 preliminarily performs the workforms for which the periodic update has been set, for a predetermined period. If the non-periodic update is set, the update execution unit 270 preliminarily performs the workform for which the execution has been requested, before actually performing the workform. If a manual update is requested from the image forming apparatus 300, the update execution unit 270 preliminarily performs the selected workform before actually performing the workform.

The main control unit 280 controls the whole operation of the server 200 using various kinds of programs stored in the workform storage unit 250. The main control unit 280 executes a workform management solution, and controls the communication unit 210 to transmit the workform to the image forming apparatus 300 or the user terminal 100 when the written workfom is changed or when a user's request is inputted. The main control unit 280 preliminarily performs the workforms in accordance with the update option set by the update setting unit 241, and controls the update execution unit 270 to update the workforms based on the result of the preliminary performance.

If the input source or destination is changed by the preliminary performance, the main control unit 280 controls the display unit 230 to display the changed update information, or controls the communication unit 210 to transmit the updated workform and the update information to the user terminal 100 or the image forming apparatus 300. Accordingly, the user terminal 100 or the image forming apparatus 300 performs the work using the updated workform, or displays the updated information on the screen.

FIG. 5 illustrates an example of a screen 50 displaying workform change information in accordance with a preliminary performing of the workform and displayed on the display unit 230. If the workform is "scan to FTP", the screen 50 displaying the workform change information proposes to adjust the resolution from 600dpi to 300dpi even though the input source set in the workform, i.e. the image forming apparatus 300, is available. Since the destination set in the workform, i.e., FTP server 2, is unavailable, the destination of the workform has been changed from the FTP server 2 having an address of "10.88.194.31" to the FTP server 2 having an address of "192.168.10.1".

According to aspects of the present invention as described above, the workform management apparatus 200 can update the workform by preliminarily performing the workform before performing the workform desired by the user. In particular, according to aspects of the present invention, if the input source and destination of the workform are unavailable, they are changed to available input source and destination through the preliminary performance, and thus the user can succeed in workform at once without separately editing the workform. According to additional aspects of the present invention, the changed workform information is displayed on the display unit 230, the user terminal 100, or the image forming apparatus 300, and thus the user can easily see the change information

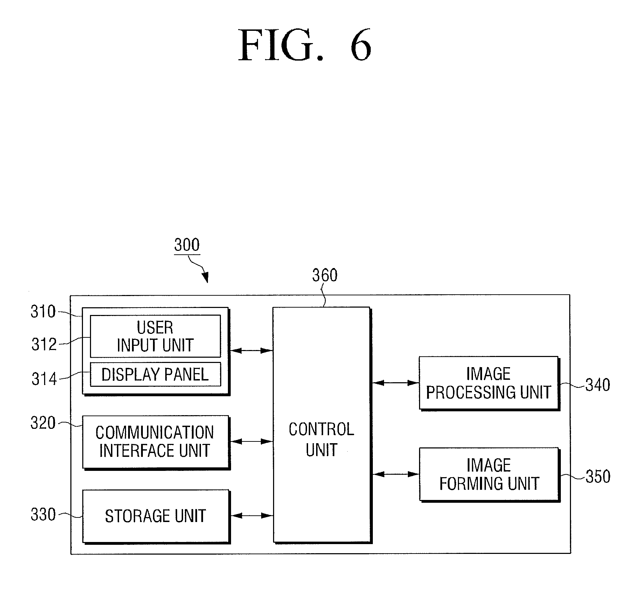

FIG. 6 is a block diagram of the construction of the image forming apparatus 300 of FIG. 1. The image forming apparatus 300 as illustrated in FIG. 6 includes an operation panel unit 310, a communication interface unit 320, a storage unit 330, an image processing unit 340, an image forming unit 350, and a control unit 360. The image forming apparatus 300 may include additional and/or different units. Similarly, the functionality of two or more of the above units may be integrated into a single component. In addition, the image processing unit 340, image forming unit 350, and the control unit 360 may include one or more processors whose functionality is provided using software and/or hardware.

The operation panel unit 310 includes a user input unit 312 and a display panel 314. The user input unit 312 receives a user command from the user and transmits the user command to the control unit 360. The user requests a desired function by manipulating a plurality of function keys and a touch screen provided in the user input unit 312. In addition, the user input unit 312 includes a workform button. The workform button may be used to enter into a workform mode and to request display of the workform received from the workform management apparatus 200.

The display panel 314 displays the state of the image forming apparatus 300 under the control of the control unit 360, and displays the workform received from the workform management apparatus 200 on a screen as illustrated in FIG. 3 or 5.

The communication interface unit 320 is communicably connected to the user terminal 100, another image forming apparatus (not illustrated), and the workform management apparatus 200 through a wired and/or wireless communication network (not illustiated). The communication interface unit 320 outputs the workform, workfom change information, and the like, transmitted from the workform management apparatus 200, to the image processing unit 340. The storage unit 330 stores therein various kinds of programs, workforms, and the like, used to implement the function of the image forming apparatus 300.

The image processing unit 340 processes the workform and the workform change information transmitted from the workform management apparatus 200 to display the workform and the workform change information. For example, if the user requests an update option of the workform, the image processing unit 340 generates a screen 30 as illustrated in FIG. 3 and generates the workform change information transmitted from the workform management apparatus 200 as illustrated in FIG. 5.

The image forming unit 350 forms an image by generating image data of a document. For example, in the case where the image forming unit 350 is provided with a scanner (not illustrated), a print engine unit (not illustrated), and a modem (not illustrated), the image forming unit 350 performs scanning, printing, copying, facsimile transmission/reception, and the like.

The control unit 360 controls the whole operation of the image forming apparatus 300 in accordance with stored control programs. If the user selects the workform button, the control unit 360 enters into the workform mode, and controls the communication interface unit 340 to attempt a connection with the workform management apparatus 200. If the manual update of the selected workform is set after the workform is selected through the user input unit 312, the control unit 360 controls the communication interface unit 320 to request the manual update of the selected workform from the workform management apparatus 200. If the user requests the performance of the selected workform after the completion of the manual update, the control unit 360 requests the workform management apparatus 200 to work using the updated workform.

The user can request the preliminary performance of the workform from the image forming apparatus 300. In this case, the communication interface unit 320 of the image forming apparatus 300 receives the workform mapped on the user from the workform management apparatus 200. The storage unit 330 stores the received workform.

If the menu 30 as illustrated in FIG. 3 is displayed by a user manipulation after the workform is displayed on the display panel 314 of the image forming apparatus 300, the user selects and sets a desired update option. If the update option is set, the image forming apparatus 300 transmits the set update option to the workform management apparatus 200 to preliminarily perform the workform.

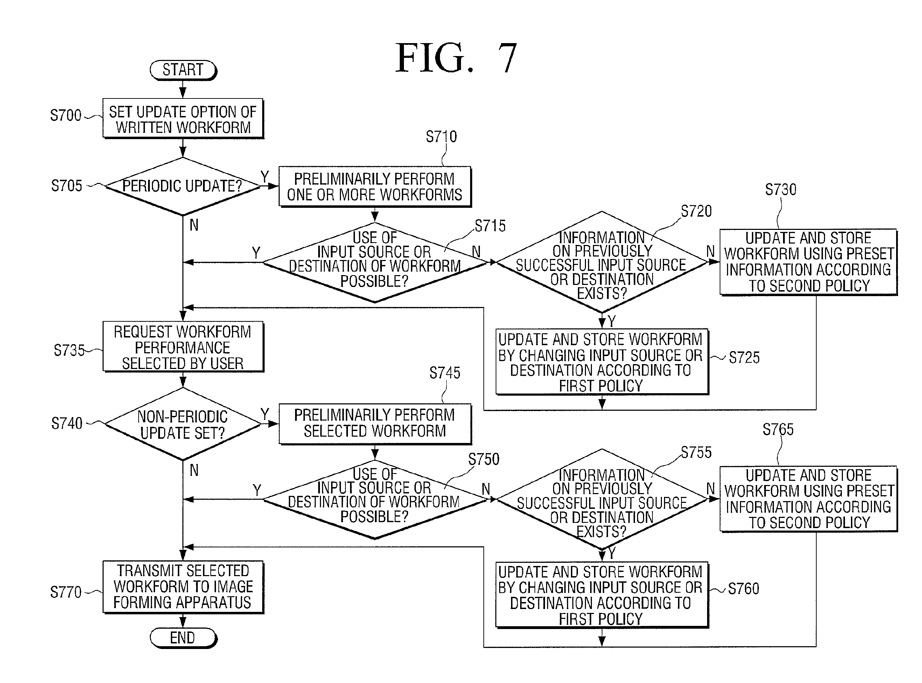

FIG. 7 is a flowchart of a workform management method performed by the apparatus of FIG. 2. The user sets the update option by using the menu 30 as illustrated in FIG. 3 after writing the workform in operation S700. The set update option is stored in the workform storage unit 250. The user sets the update option by written workforms, or sets the same update option for all the workforms written by the user.

If the periodic update is set in operation S700 and the corresponding period arrives in operation S705, the preliminary performance control unit 272 attempts virtual simulations against the respective workforms, and provides the results of the virtual simulations to the preliminary performance processing unit 274. The preliminary performance processing unit 274 judges whether the use of the workform is possible by analyzing the result of preliminary performance in operation S710 in operation S715. Hereinafter, explanation will be made under the assumption that, but is not limited to, it is judged whether the use of the input source or destination is possible.

If one or more of the input source and destination of the workform are unavailable, the workform update unit 278 updates the workform by using the first policy having a high priority. If information on the previously successful input source or destination exists in operation S720, the workform update unit 278 updates the workform by changing the unavailable input source or destination in accordance with the first policy in operation S725. The updated workform is stored in the workform storage unit 250. If the use of the first policy is impossible in operation S720, the workform update unit 278 updates the workform by using preset information, i.e. backup information, in accordance with the second policy, and the main control unit 280 stores the updated workform in the workform storage unit 250 in operation S730.

If the user selects the workform through the user terminal 100 or the image forming apparatus 300, and then requests the performance of the selected workform after operation S705, S725, or S730 in operation S735, the main control unit 280 confirms whether the non-periodic update is set with respect to the selected workform in operation S740.

In operation S745, if the non-periodic update is set, the preliminary performance control unit 272 preliminarily performs the selected workform, and provides the result of the preliminary performance to the preliminary performance control unit 274.

The preliminary performance processing unit 274 judges whether use of the input source or destination of the workform is possible in operation S750 by analyzing the result of the preliminary performance in operation S745.

If one or more of the input source and destination of the workform are unavailable, the workform update unit 278 judges whether information on the previously successful input source or destination exists in operation S755. The workform update unit 278 judges whether the use of the first policy is possible.

If the use of the first policy is possible, the workform update unit 278 updates the workform by changing the unavailable input source or destination in accordance with the first policy, and the main control unit 280 stores the updated workform in the workform storage unit 250 in operation S760.

If the use of the first policy is impossible, the workform update unit 278 updates the workform by using the preset information in accordance with the second policy, and the main control unit 280 stores the updated workform in the workform storage unit 250 in operation S765.

After operation S740, S760, or S765, the main control unit 280 controls the communication unit 210 to transmit the workform selected in operation S735 to the image forming apparatus 300 in operation S770. The transmitted workform includes the changed information. The transmitted workform includes information on the input source or destination changed in operation S725, S730, S760, or S765.

According to the above-described process, if the periodic update or non-periodic update is set as the update option, the workform management apparatus 200 finds out and corrects a part where an error has occurred by automatically proceeding to preliminarily perform the workform. The workform management apparatus 200 updates and stores the workform so that the workform can be immediately performed. Accordingly, the user can acquire the result of a desired workform (e.g. through e-mail transmission) without separate edition and without failure of the workform.

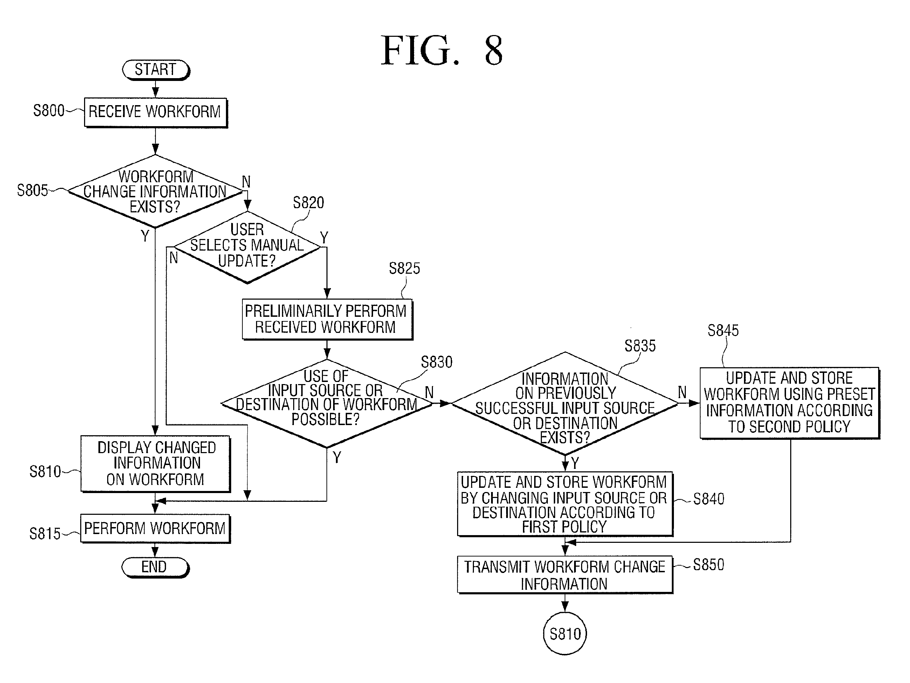

FIG. 8 is a flowchart of a workform management process performed by the apparatus of FIG. 6. The communication interface unit 320 of the image forming apparatus 300 receives the workform selected by the user in operation S735 after operation S770 in operation S800. The received workform is stored in the storage unit 330.

If information changed by operations S700 to S770 exists in the received workform in operation S805, the control unit 360 controls the image processing unit 340 and the display panel 314 so that the changed information is displayed on the display panel 314 in operation S810.

If the user confirms the changed information and requests the performance of the workform, the control unit 360 starts the performance of the workform in operation S815. For example, if the control unit 360 includes a workflow in which the workform is scanned by the image forming unit 350 and then is stored in the FTP server 12, the control unit 360 controls the image forming unit 350 to scan the fed document, and then controls the communication interface unit 320 so as to transmit the scanned document data to the workform management apparatus 200. Accordingly, the scanned document data is stored in the FTP server 12 under the control of the workform management apparatus 200. The control unit 360 may also convert the scanned document data into a format that can be stored by using the FTP, and then directly transmit the converted document data to the FTP server 12.

If the user requests the display of the screen 50 as illustrated in FIG. 5 in operation S805 and then selects the manual update in operation S820, the control unit 360 requests the preliminary performance of the received workform from the workform management apparatus 200.

Accordingly, the preliminary performance control unit 272 preliminarily performs the workfom, and provides the result of the preliminary performance to the preliminary performance processing unit 274 in operation S825. In operation S830, the preliminary performance processing unit 274 judges whether the use of the input source or destination of the workform is possible by analyzing the result of the preliminary performance. However, if manual update is not selected in operation S820 (S820-N), S815 operation can be performed.

If the use of the input source or destination of the workform is possible in operation S830, the main control unit 280 reports this to the image forming apparatus 300, and thus operation S815 can be performed. If one or more of the input source and destination of the workform are unavailable in operation S830, the workform update unit 278 judges whether information on the previously successful input source or destination exists in operation S835. The workform update unit 278 judges whether the use of the first policy is possible.

If the use of the first policy is possible, the workform update unit 278 updates the workform by changing the unavailable input source or destination in accordance with the first policy, and the main control unit 280 stores the updated workform in the workform storage unit 250 in operation S840.

If the use of the first policy is impossible, the workform update unit 278 updates the workform using the preset information in accordance with the second policy, and the main control unit 280 stores the updated workform in the workform storage unit 250 in operation S845.

In operation S850, the main control unit 280 controls the communication unit 210 to transmit the information changed in operation S840 or S845. The control unit 360 controls the display panel 314 to display the received changed information in operation S810.

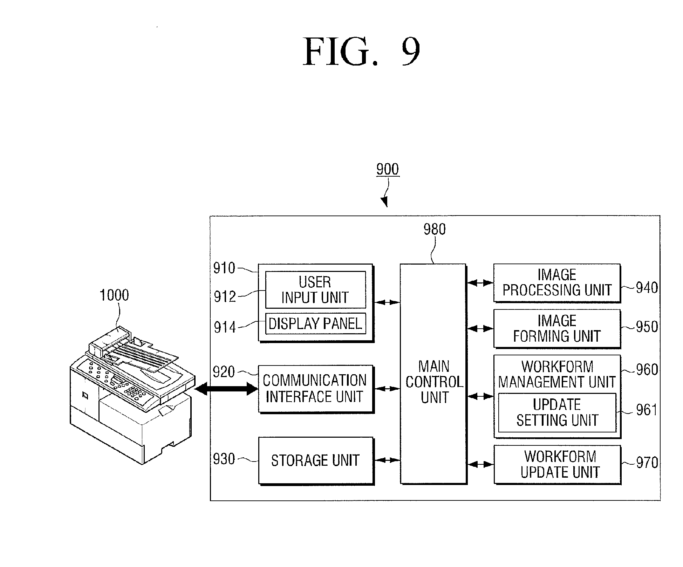

FIG. 9 is a block diagram of a workform management system according to another embodiment of the present invention. As shown in FIG. 9, the workform management system includes an image forming apparatus 900 and a workform management apparatus 1000. The image forming apparatus 900 includes an operation panel unit 910, a communication interface unit 920, a storage unit 930, an image processing unit 940, an image forming unit 950, a workform management unit 960, a workform update unit 970, and a main control unit 980.

Since the operation panel unit 910, the communication interface unit 920, the storage unit 930, the image processing unit 940, and the image forming unit 950 are similar to the operation panel unit 310, the communication interface unit 320, the storage unit 330, the image processing unit 340, and the image forming unit 350, respectively, as illustrated in FIG. 6, the detailed description thereof will be omitted. In addition, since the workform management unit 960 is similar to the workform management unit 240 as illustrated in FIG. 2, and the workform management unit 1000 is similar to the workform management unit 200 as illustrated in FIG. 2, the detailed description thereof will be omitted.

However, the image forming apparatus of FIG. 9 can provide the workform writing function and perform the update of the written workform. In the storage unit 930, the workform management solution required to write the workform is stored, and thus the user can write the workform by using the workform management solution through the image forming apparatus 900. The user can also set the workform update option when writing the workform through the image forming apparatus 900, and the image forming apparatus 900 can transmit a command to the workform management apparatus 1000 so that the workform management apparatus 1000 updates the workform by preliminary performing the workform in accordance with the set workform update option.

The workform management unit 960 writes or edits the workform in accordance with the user's instruction by driving the workform management solution. The written workform is stored in the storage unit 930 or the workform management apparatus 1000.

The workform management unit 960 includes an update setting unit 961. The update setting unit 961 generates a screen 30 for setting the update option of the written workform to the periodic update, the non-periodic update, or the manual update as illustrated in FIG. 3. If the update option setting screen 30 is displayed on the display panel 914, the user can set a desired update option by using the user input unit 912. The set update option is stored in the storage unit 930 together with identification information of the workform.

The workfom update unit 970 preliminarily performs the corresponding workform in accordance with the set workform update option, and updates the unavailable workform using the preset policy. The main control unit 980 transmits the updated workfom to the workform management apparatus 1000. Accordingly, the updated workform is stored in the workform management apparatus 1000. The main control unit 980 may also store the update workform in the storage unit 930.

Aspects of the invention may also be implemented using software executed by one or more computers. Although a few embodiments of the present invention have been shown and described, it would be appreciated by those skilled in the art that changes may be made in these embodiments without departing from the principles of the invention, the scope of which is defined in the claims.

## Claims

1. A workform management method comprising:
storing a workform in a memory of an apparatus;
updating the stored workform in accordance with a preset workform update option; and
storing the updated workform in the memory of the apparatus.

2. The workform management method according to claim 1, wherein the update operation comprises preliminarily performing the stored workform before actually performing the stored workform.

3. The workform management method according to claim 1, wherein the update operation comprises changing the stored workform so that the stored workform can be performed if the performing of the stored workform would be impossible.

4. The workform management method according to claim 1, wherein the workform update option comprises at least one of an automatic update and a manual update.

5. The workform management method according to claim 4, further comprising:
a user requesting a manual update of a received workform in an image forming apparatus receiving the received workform; and
updating the received workform by preliminarily performing the received workform.

6. The workform management method according to claim 1, further comprising transmitting the updated workform to the image forming apparatus to perform the updated workform.

7. The workform management method according to claim 6, wherein the performing of the updated workform comprises displaying, on a display, information corresponding to the update of the updated workform before performing the updated workform.

8. A workform management apparatus comprising:
a workform storage unit to store one or more workforms;
an update execution unit to update the stored workform in accordance with a preset workform update option; and
a main control unit to control the workform storage unit to store the updated workform.

9. The workform management apparatus of claim 8, wherein the update execution unit preliminarily performs the stored workform before actually performing the stored workform.

10. The workform management apparatus according to claim 8, wherein the update execution unit updates the stored workform so that the workform can be performed if the performing of the stored workform would be impossible.

11. The workform management apparatus according to claim 8, wherein the workform update option comprises at least one of an automatic update and a manual update.

12. The workform management apparatus according to claim 11, further comprising:
a communication unit to communicate with one or more image forming apparatuses;
wherein the one or more image forming apparatuses receive the stored workform through the communication unit, and if a user requests a manual update of the received workform in the image forming apparatus, the main control unit controls the update execution unit to preliminarily perform the received workform.

13. The workform management apparatus according to claim 8, wherein the main control unit transmits the updated workform to the one or more image forming apparatuses, so that the one or more image forming apparatuses perform the updated workform.

14. The workform management apparatus according to claim 13, wherein the one or more image forming apparatuses display information corresponding to the update of the workform before performing the updated workform.
